# EUROPEAN PATENT APPLICATION

(11) **EP 4 716 059 A1**
(43) Date of publication of application: **25.03.2026**
(21) Application number: 25201610.0
(22) Date of filing: 11.09.2025
(51) Int. Cl.: H02J 7/34, H01G 11/00

(54) **ENERGY STORAGE DEVICE FOR POWER FLUCTUATION MITIGATION AND SHORT BACKUP SUPPORT IN DATA CENTERS**

(30) Priority: 19.09.2024 US 202463696636 P
(71) Applicant: Google LLC, Mountain View, CA 94043 (US)
(72) Inventor: Mobarrez, Maziar, Mountain View, CA 94043 (US); Boovaragavan, Vijayasekaran, Mountain View, CA 94043 (US)
(74) Representative: Betten & Resch

(57) **Abstract**

Generally disclosed herein is a mechanism to mitigate power fluctuations of a data center by dynamically charging and discharging a capacitor-based energy storage device. According to some examples, a supercapacitor control system can be configured to monitor power demand fluctuations and initiate charging of the supercapacitor during a workload ramp-up period for training machine learning (ML) models with massive training data. As the system starts discharging the supercapacitors during the ramp-up period, the system is capable of reducing the rate of the power demand increase. Similarly, during a ramp-down period, the system is configured to charge the supercapacitor as the training of the ML model is being finished and the power demand decreases. The power stored in the supercapacitors may be used to reduce the rate of the power demand decrease when the training of the ML model is being completed, thereby maintaining the stability of the power utility.

## Description

Large-scale, synchronous machine learning (ML) workloads may almost instantaneously generate power fluctuation in the range of tens of megawatts on various electronic components, potentially impacting both data center and utility stability. Often, such workload changes may require repetitive power fluctuations in cycles where the power fluctuates frequently at short intervals and repeats the cycles for an extended time. High rates of power fluctuations can cause voltage and frequency deviations and affect the power source stability. Frequent power fluctuations can also exceed the capacity of a single power generator, causing overloads requiring additional power generators to be connected.

### SUMMARY

Generally disclosed herein is a mechanism to mitigate power fluctuations of a data center using capacitor-based energy storage devices to absorb the power fluctuation and provide high power backup over a short duration of time. The capacitor-based energy storage devices can provide high power and high energy to mitigate both workloads and power fluctuations by smoothing the peak load by using the power discharged from the capacitor-based energy devices.

An aspect of the disclosure provides a system for mitigating power fluctuations of a data center, the system comprising: one or more supercapacitors; and one or more processors in communication with the one or more supercapacitors, the one or more processors configured to: measure power demand of the data center; determine whether the power demand decreases below a lower power demand threshold; in response to the power demand decreasing below the lower power demand threshold, initiate charging the one or more supercapacitors; determine whether the power demand increases over an upper power demand threshold; and in response to the power demand increasing over the upper power demand threshold, initiate discharging the one or more supercapacitors.

In some examples, the one or more processors are configured to disengage the charging of each supercapacitor of the one or more supercapacitors when a state of charge (SOC) of each supercapacitor reaches a SOC threshold.

In some examples, the one or more supercapacitors are configured to be discharged during a period of power demand ramp-up to reduce a rate of a power demand increase

In some examples, the one or more supercapacitors are configured to be charged during a period of power demand ramp-down to reduce a rate of power demand decrease.

In some examples, the discharging of the one or more supercapacitors is initiated when one or more SOCs of the one or more supercapacitors are more than the SOC threshold.

In some examples, the one or more supercapacitors are located within server racks or a dedicated power rack included in the data center.

In some examples, the charging of the one or more supercapacitors is initiated during at least one of a deep idle period or an active idle period, and wherein the one or more supercapacitors are configured to continually charge during both the deep idle period and active idle period.

In some examples, the deep idle period and the active idle period are due to transient workload fluctuations.

Another aspect of the disclosure provides a method for mitigating power fluctuations of a data center, the method comprising: measuring power demand of the data center; determining whether the power demand decreases below a lower power demand threshold; in response to the power demand decreasing below the lower power demand threshold, initiating charging one or more supercapacitors; determining whether the power demand increases over an upper power demand threshold; and in response to the power demand increasing over the upper power demand threshold, initiating discharging the one or more supercapacitors.

In some examples, the method further comprises disengaging the charging of each supercapacitor of the one or more supercapacitors when a state of charge (SOC) of each supercapacitor reaches a SOC threshold.

In some examples, the one or more supercapacitors are discharged during a period of power demand ramp-up to reduce a rate of a power demand increase.

In some examples, the one or more supercapacitors are charged during a period of power demand ramp-down to reduce a rate of power demand decrease.

In some examples, the discharging of the one or more supercapacitors is initiated when one or more SOCs of the one or more supercapacitors are more than the SOC threshold.

In some examples, the one or more supercapacitors located within server racks or a dedicated power rack included in the data center.

In some examples, the charging of the one or more supercapacitors is initiated during at least one of a deep idle period or an active idle period, and wherein the one or more supercapacitors are configured to continually charge during both the deep idle period and active idle period.

In some examples, the deep idle period and the active idle period are due to transient workload fluctuations.

Yet another aspect of the disclosure provides a non-transitory machine-readable medium comprising machine-readable instructions encoded thereon for performing a method of mitigating power fluctuations of a data center, the method comprising: measuring power demand of the data center; determining whether the power demand decreases below a lower power demand threshold; in response to the power demand decreasing below the lower power demand threshold, initiating charging one or more supercapacitors; determining whether the power demand increases over an upper power demand threshold; and in response to the power demand increasing over the upper power demand threshold, initiating discharging the one or more supercapacitors.

In some examples, the method further comprises disengaging the charging of each supercapacitor of the one or more supercapacitors when a state of charge (SOC) of each supercapacitor reaches a SOC threshold.

In some examples, the one or more supercapacitors are discharged during a period of power demand ramp-up to reduce a rate of a power demand increase

In some examples, one or more supercapacitors are charged during a period of power demand ramp-down to reduce a rate of power demand decrease.

### BRIEF DESCRIPTION OF THE DRAWINGS

FIG. 1 is a schematic representation of a supercapacitor control system for a data center in accordance with aspects of the disclosure.
FIG. 2 is an example supercapacitor control system in accordance with aspects of the disclosure.
FIGS. 3A-B provides example diagrams illustrating deployment locations of supercapacitors in accordance with aspects of the disclosure.
FIGS. 4A-B provides example diagrams illustrating supercapacitor modules in accordance with aspects of the disclosure.
FIGS. 5A-B provides example diagrams illustrating power interfaces between various components in accordance with aspects of the disclosure.
FIG. 6 is a system block diagram of a rack-level infrastructure of the supercapacitor control system in accordance with aspects of the disclosure.
FIG. 7 provides a graph representing rates of power ramp-up and ramp-down using the supercapacitor control system in accordance with aspects of the disclosure.
FIG. 8 provides a graph representing peak reduction during power fluctuations using the supercapacitor control system in accordance with aspects of the disclosure.
FIGS. 9A-B provides a graph representing peak load support for high frequency and repetitive power fluctuations using the supercapacitor control system in accordance with aspects of the disclosure.
FIG. 10 is an example flow diagram of the supercapacitor control system in accordance with aspects of the disclosure.

### DETAILED DESCRIPTION

The present disclosure relates to mitigating power fluctuations of a data center by dynamically charging and discharging a capacitor-based energy storage device such as a supercapacitor. A supercapacitor may refer to any type of a high-capacity capacitor with a capacitance value much higher than solid-state capacitors but with lower voltage limits. According to some examples, a supercapacitor control system (the "system") can be configured to monitor power demand fluctuations and initiate discharging of the supercapacitor during a ramp-up period. An example of a ramp-up period includes a time period when the power demand increases as a machine learning (ML) model starts being trained with massive training data. As the system starts charging the supercapacitors during the ramp-up period, the system is capable of reducing the rate of the power demand increase. Similarly, during a ramp-down period, the system is configured to charge the supercapacitor as the training of the ML model is being finished and the power demand decreases. The power stored in the supercapacitors may be used to reduce the rate of the power demand decrease when the training of the ML model is being completed, thereby maintaining the stability of the power utility.

According to some other examples, the system may be configured to reduce or mitigate high-frequency peak-to-peak power fluctuations when the ML model is being trained with the training data. The supercapacitors may be configured to discharge during peak power demands and charge during idle periods. One example of an idle period includes active idle, wherein the workloads of the server machines frequently decrease by a small magnitude. Another example of the idle period includes deep idle, wherein the workloads of the server machines decrease by a larger magnitude than the active idle for a longer duration. The system may be configured to discharge the power from the supercapacitors during the peak power demand. The system may stabilize the data center power system through fast-acting voltage and frequency control at a system level.

In some examples, the discharge of the supercapacitors can start when the power supply ceases to supply power, such as during a power outage of the data center. The system may use in-rack batteries along with supercapacitors to provide backup power during a power outage.

The system may use two types of supercapacitor cells: electric double-layer capacitors (EDLC) and/or Lithium-ion capacitors (hybrid capacitors). EDLC may provide high peak power density and low energy density while lithium-ion capacitors provide medium peak power density and medium energy density. The system can deploy the supercapacitors to the payload rack (server racks) or a dedicated power rack. The supercapacitors can be deployed in modules at a shelf level or deployed in a single large-scale module at a rack level. The supercapacitors may be controlled through a DC charger controller or without the DC charger controller.

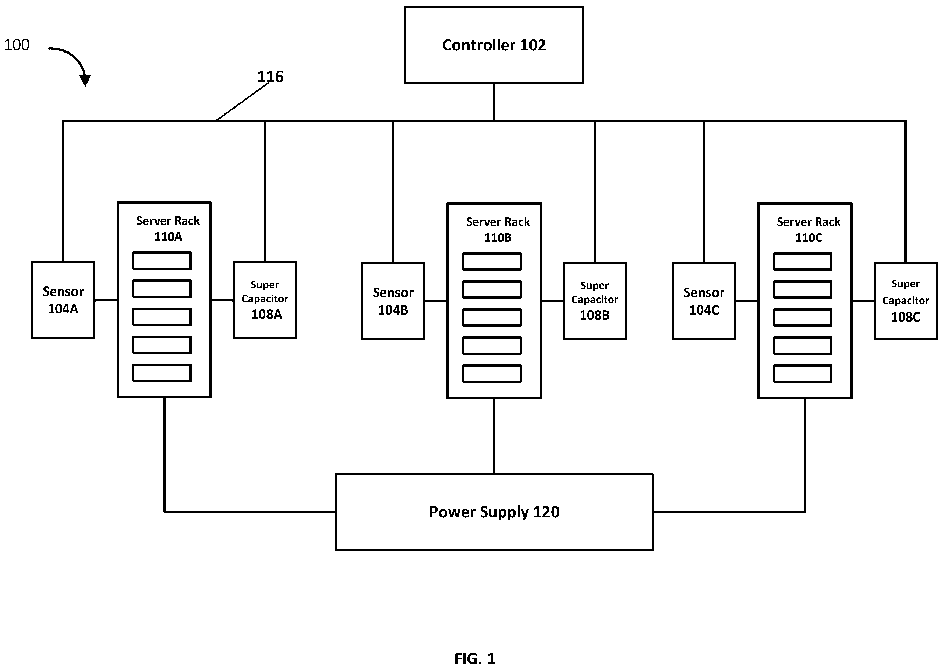

FIG. 1 is a schematic representation of a supercapacitor control system 100 for a data center. The supercapacitor control system 100 includes controller 102, power supply 120, and server racks 110A-C. Each server rack is connected to sensors 104A-C and supercapacitors 108A-C, respectively. Each sensor may be configured to measure the changes in the amount of workload for each server rack. Each sensor may also be configured to monitor the amount of power being consumed by each server rack and monitor the power received from power supply 120. Each sensor may transmit the measured data to controller 102 at a preconfigured interval.

Supercapacitors 108A-C can be configured to store power supplied to each server rack. Supercapacitors may refer to any high-capacity capacitor with a capacitance value much higher than solid-state capacitors but with lower voltage limits. Supercapacitors 108A-C may include but are not limited to, electric double-layer capacitors (EDLC) and/or Lithium-ion capacitors (hybrid capacitors), etc. The supercapacitors 108A-C can be placed along with in-rack batteries. Server racks 110A-C include one or more computing devices used for various purposes, such as internet hosting, cloud computing, storage, computing, networking, machine learning, etc. The computing devices may include processors that include one or more individual circuits, transistors, and/or other components.

Each sensor may send the power consumption measurement in watts and/or vars to controller 102 via bus 116. Bus 116 may include a physical layer implementing a communication protocol between power consumption sensors attached to each server rack or each computing device and controller 102. Supercapacitors 108A-C can be configured to communicate with controller 102 via bus 116.

Controller 102 may be configured to control the charging and discharging of supercapacitors 108A-C. For example, supercapacitors 108A-C can be configured to continuously charge and store power when the power demand is below a predefined threshold or power demand starts to decrease as the workloads of the respective server rack decrease. Supercapacitors 108A-C can be configured to discharge the stored power when the power demand is at its peak such that the power supplied from supercapacitors 108A-C can help manage power fluctuations and maintain the stability of the power supply 120. The power discharged from supercapacitors 108A-C can also help smooth the peak load to prevent extreme spikes in the power demand.

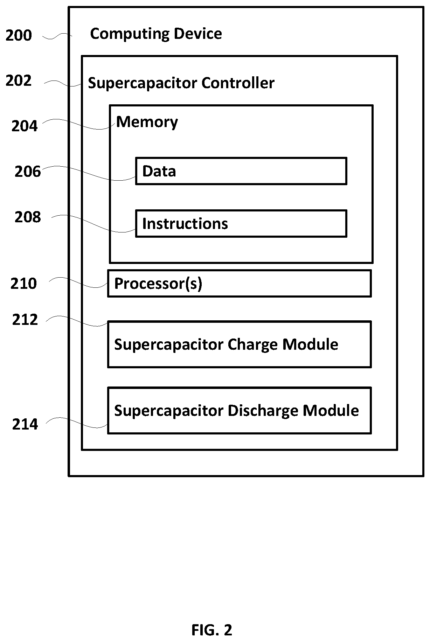

FIG. 2 is a block diagram illustrating an example computing device 200 according to aspects of this disclosure. The computing device can take on a variety of configurations, such as, for example, a controller or microcontroller, or a processor, such as a CPU, a GPU, or an ASIC, including a tensor processing unit (TPU). The computing device may further include a supercapacitor controller 202. The supercapacitor controller 202 may be configured to control the charging and discharging of the supercapacitors to mitigate the power demand fluctuations of the server racks.

Supercapacitor controller 202 may include a processor 210, memory 204 including data 206 and instructions 208, supercapacitor charge module 212, and supercapacitor discharge module 214, as well as other components typically present in server computing devices. In other examples, such operations may be performed by one or more of the computing devices in a data center or elsewhere.

The memory 204 can store information accessible by the processor 210, including instructions 208 that can be executed by the processor 210. Memory can also include data 206 that can be retrieved, manipulated, or stored by the processor 210. Memory 204 may be a type of non-transitory computer-readable medium capable of storing information accessible by the processor 210, such as a hard drive, solid-state drive, tape drive, optical storage, memory card, ROM, RAM, DVD, CD-ROM, write-capable, and read-only memories. The processor 210 can be a well-known processor or other lesser-known types of processors. Alternatively, the processor 210 can be a dedicated controller such as an ASIC.

The instructions 208 can be a set of instructions executed directly, such as machine code, or indirectly, such as scripts, by the processor 210. In this regard, the terms "instructions"," "steps," and "programs" can be used interchangeably herein. The instructions 208 can be stored in object code format for direct processing by the processor 210, or other types of computer language including scripts or collections of independent source code modules that are interpreted on demand or compiled in advance. For example, instructions 208 may include instructions for supercapacitors 108A-C depicted in FIG.1 to charge or discharge power based upon input from supercapacitor charge module 212 and supercapacitor discharge module 214.

The data 206 can be retrieved, stored, or modified by the processor 210 in accordance with the instructions 208. For instance, although the system and method are not limited by a particular data structure, the data 206 can be stored in computer registers, in a relational database as a table having a plurality of different fields and records, or in XML documents. The data 206 can also be formatted in a computer-readable format such as, but not limited to, binary values, ASCII, or Unicode. Moreover, data 206 can include information sufficient to identify relevant information, such as numbers, descriptive text, proprietary codes, pointers, references to data stored in other memories including other network locations, or information that is used by a function to calculate relevant data. Data 206 can include historical data pertaining to the correlation between workloads and power demand. Additionally, or alternatively, data 206 may include test data obtained based on experiments performed using supercapacitors 108A-C.

Supercapacitor charge module 212 may command supercapacitors 108A-C to charge during an active idle state or deep idle state. In both states, the power demand decreases as the workloads of each server rack decrease. The active idle state may refer to frequent fluctuations in power demand and workloads. The magnitude of the fluctuations is smaller than that of the deep idle state. The deep idle state may refer to a state where the power demand and workloads fluctuate with a greater magnitude. When sensors 104A-C send the fluctuation information to controller 102, supercapacitor charge module 212 may be configured to start charging supercapacitors 108A-C.

Supercapacitor discharge module 214 may command supercapacitors 108A-C to discharge the power charged when the server racks 110A-C are in either an active idle state or a deep idle state. Supercapacitor discharge module 214 may command supercapacitors 108A-C to discharge power when sensors 104A-C determine that the power demand will be at its peak as the workloads of each server rack are suddenly increasing and exceeding a threshold level. The discharged power from supercapacitors 108A-C may be used by server racks 110A-C along with power supplied from power supply 120 such that the amount of the power supplied from power supply 120 does not undergo extreme spikes.

FIG. 2 functionally illustrates processor 210 and memory 204 as being within the same block, but processor 210 and memory 203 may instead include multiple processors and memories that may or may not be stored within the same physical housing. For example, some of the instructions 208 and data 206 may be stored on a removable CD-ROM and others may be within a read-only computer chip. Some or all of the instructions and data can be stored in a location physically remote from, yet still accessible by, the processor 210. Similarly, the processor 210 can include a collection of processors, which may or may not operate in parallel.

It is to be appreciated that in this example, supercapacitor charge module 212 and supercapacitor discharge module 214 are shown as part of supercapacitor controller 202. In other examples, supercapacitor charge module 212 and supercapacitor discharge module 214 may be implemented in one or more other systems or computing devices.

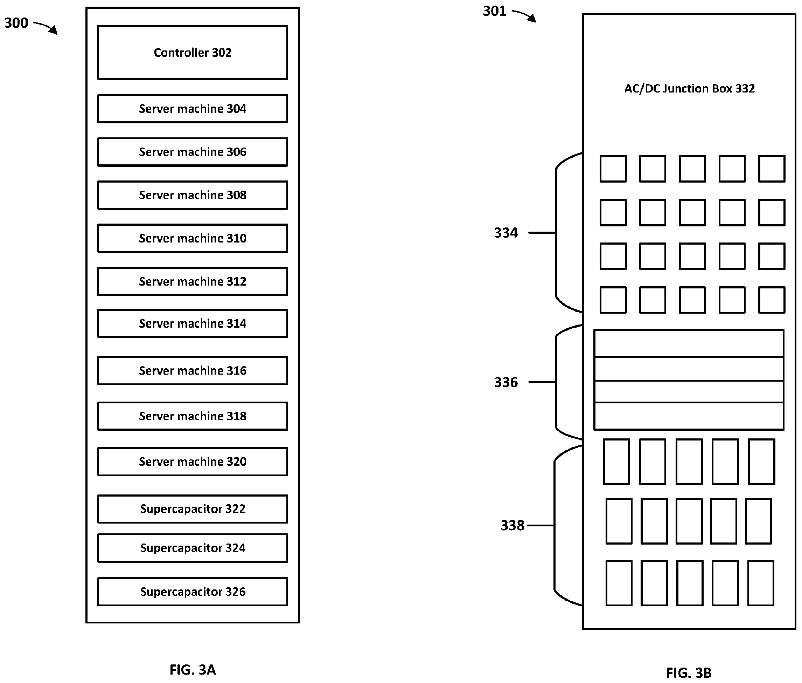

FIGS. 3A-B illustrate example deployment locations of supercapacitors. FIG. 3A illustrates supercapacitors deployed within each server rack. Server rack 300 may include controller 302, server machines 304-320, and supercapacitors 322-326. Server rack 301 may be equivalent to any one of server racks 110A-C depicted in FIG. 1. Controller 302 may be equivalent to supercapacitor controller 202 depicted in FIG. 2. Server machines 304-320 may include one or more computing devices used for various purposes, such as internet hosting, cloud computing, storage, computing, networking, machine learning, etc. Supercapacitors 322-326 may be individual supercapacitors that can be included in each supercapacitor of supercapacitors 108A-C. Controller 302 may be configured to receive the power demand and/or load demand data from sensors (not shown) connected to each server machine 302-320 and send control instructions to supercapacitors 322-326 to charge or discharge when the power demand changes.

FIG. 3B illustrates supercapacitors deployed within a power rack with power supply devices. Power rack 301 may be AC/DC junction box 332 including power supply units 334, supercapacitor shelves 336, and backup battery units 338. Power supply units 334 may be equivalent to power supply 120. Power supply units 334 may supply power to each server rack. Supercapacitor shelves 336 may include one or more supercapacitors such as supercapacitors 332-326. Backup battery units 338 may refer to in-rack batteries that can provide additional power during a power outage.

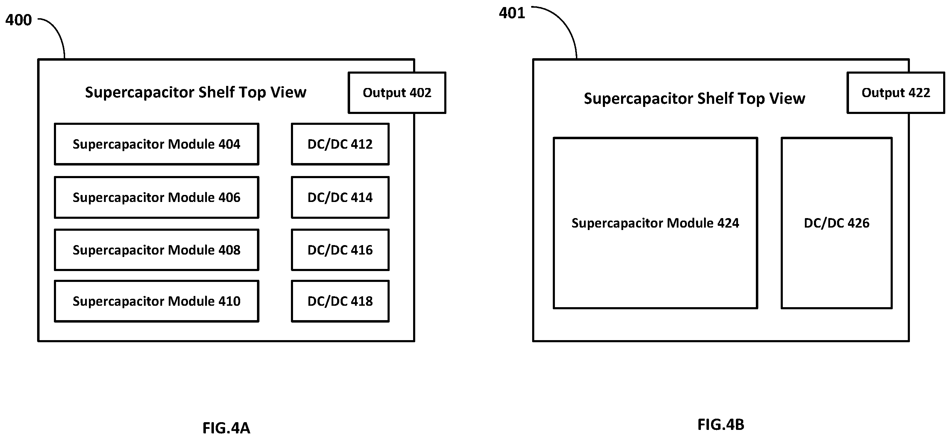

FIGS. 4A-B show top views of example deployments of supercapacitors in different types of modules. FIG. 4A illustrates a top view of a supercapacitor shelf comprising multiple supercapacitor modules. For example, supercapacitor shelf 400 may include output 402, supercapacitor modules 404-410, and DC/DC converters 412-418. Each supercapacitor module may include one or more supercapacitors such as supercapacitors 322-326 depicted in FIG. 3A. Each supercapacitor module may be connected to each DC/DC converter 412-418, respectively. DC/DC converters 412-418 may include any type of electronic circuit or electromechanical devices that can convert a source of direct current received from each supercapacitor module from one voltage level to another voltage level. The converted power can be transmitted to other components of the server racks via output 402.

FIG. 4B illustrates a top view of another example supercapacitor shelf comprising a large-scale supercapacitor module. For example, supercapacitor shelf 401 may include supercapacitor module 424, DC/DC converter 426, and output 422. Supercapacitor module 424 may include one or more supercapacitors. According to some examples, supercapacitor module 424 may include more numbers of supercapacitors than the number of supercapacitors that each supercapacitor module 404-410 may include. Supercapacitor module 424 may charge and/or discharge greater amounts of power than each supercapacitor module. Since supercapacitor shelf 401 only includes one large-scale supercapacitor module 424, a single DC/DC converter 426 may be connected to convert the voltage of the power discharged from supercapacitor module 424. The converted power may be transmitted to other components of the server racks via output 422.

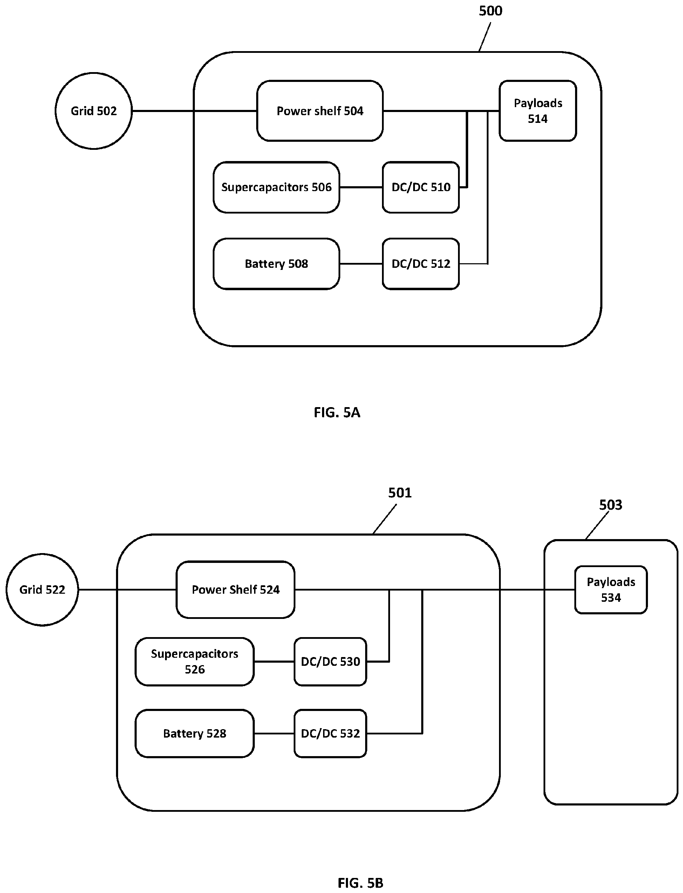

FIGS. 5A-B illustrate example power interfaces between various components of power racks and server racks. FIG. 5A illustrates example power interfaces between grid 502 and a server rack 500. Supercapacitors 506 may be equivalent to supercapacitors deployed within a server rack such as supercapacitors 322-326 deployed within the server rack 300 as depicted in FIG. 3A. Battery 508 may be in-rack batteries that can charge and/or discharge power simultaneously when supercapacitors 506 charge and/or discharge. Supercapacitors 506 and battery 508 may charge using the power supplied by grid 502. Power shelf 504 may provide power rectification, power system management, and power distribution designed for a data center. Power shelf 504 may receive the power from grid 502 and transmit the power to pay loads 514 and DC/DC converters 510-512. Payloads 514 may include server machines included in each server rack. The converted power can be used to charge supercapacitors 506 and battery 508. When the power is discharged from supercapacitor 506 and battery 508, the voltage level of the power may be converted to another voltage level using DC/DC converter 510-512. The converted power may be transmitted to payloads 514.

FIG. 5B illustrates a different configuration of the power interface between a power grid, power rack, and server rack. For example, power rack 501 may include power shelf 524, supercapacitor 526, battery 538, and DC/DC/ converter 530-532. Power rack 501 may be compared to power rack 301 depicted in FIG. 3. Power can be transmitted from grid 522 to power shelf 524. DC/DC converters 530-532 may convert the power and transmit the power to supercapacitor 526 and battery 528. Supercapacitor 526 and battery 538 may discharge the stored power. The voltage level of the discharged power may be converted to another voltage level using DC/DC converters 530-532. The converted power may be transmitted to payloads 534. Payloads 534 may be included in server rack 503. Server rack 503 may be compared to a server rack of server racks 110A-C.

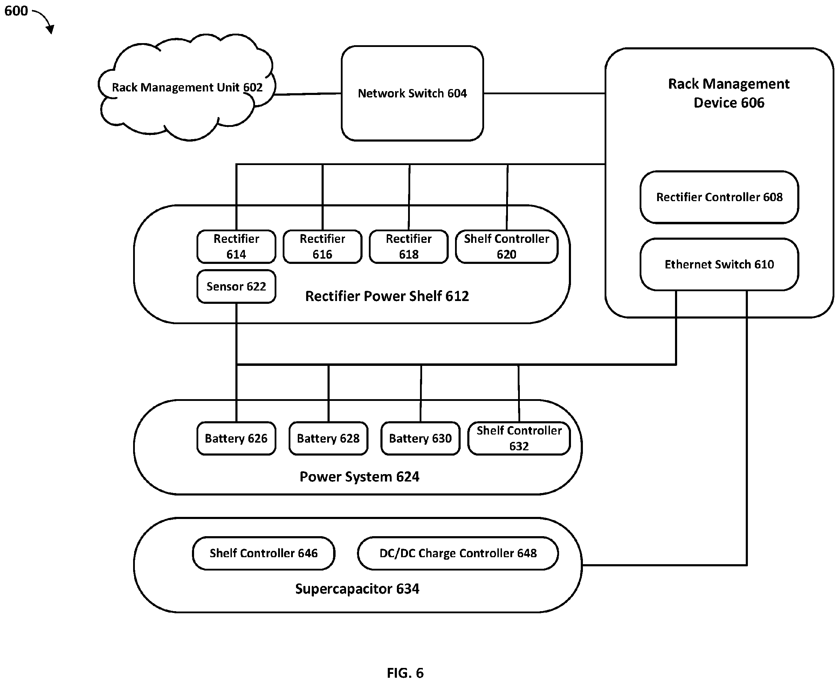

FIG. 6 provides a system block diagram of a rack-level infrastructure of the supercapacitor control system. The supercapacitor control system 600 may be configured to mitigate power fluctuations of a data center by dynamically charging and discharging supercapacitors. The supercapacitor control system 600 may include rack management unit 602, network switch 604, rack management device 606, rectifier power shelf 612, power system 624, and supercapacitor 634. Rack management unit 602 may be implemented using one or more computer devices comparable to computing device 200 as depicted in FIG.2. In some examples, rack management unit 602 may be implemented using cloud-based computing devices. Rack management unit 602 may send control instructions for charging or discharging in-rack batteries included in power system 624 and supercapacitor 634. Rack management unit 602 may be configured to communicate with network switch 604. Network switch 604 may be configured to connect rack management unit 602 and other devices such as rack management device 606.

Rack management device 606 may include rectifier controller 608 and ethernet switch 610. Rack management device 606 may be configured to communicate with rectifier power shelf 612 using rectifier controller 608. Rack management device 606 may also be configured to communicate with power system 624 and supercapacitor 634 via ethernet switch 610.

Rectifier power shelf 612 may include rectifiers 614-618, shelf controller 620, and sensor 622. Rectifiers 614-618 may be electronic devices that can convert an alternating current into a direct current via a rectification process. Any power charged to or discharged from power system 624 and supercapacitor 634 may be rectified by rectifiers 614-618. Shelf controller 620 may receive control instructions from rack management device 606. Sensor 622 may monitor the power level of power system 624. For example, sensor 622 may measure how much power is stored in each battery 626-630. The measured information may be sent to rack management device 660 by shelf controller 620.

Power system 624 may include batteries 626-630. Batteries 626-630 may be in-rack batteries equipped within the server racks. Batteries 626-630 may be configured to discharge during the power demand ramp-up period and charge during the power demand ramp-down period. Shelf controller 632 may receive the control instructions from rack management device 606 and control the charging and discharging of batteries 626-630.

Supercapacitor 634 may include shelf controller 646 and DC/DC charge controller 648. Shelf controller 646 may be compared to shelf controller 632. Shelf controller 646 may receive control instructions from rack management device 606 and control charging and discharging of supercapacitor 634. DC/DC charge controller 648 may control or alternate the power received from the power supply before charging the supercapacitor 634 by adjusting the current or voltage. Similarly, DC/DC charge controller 648 may also control or alternate the power discharged from supercapacitor 634.

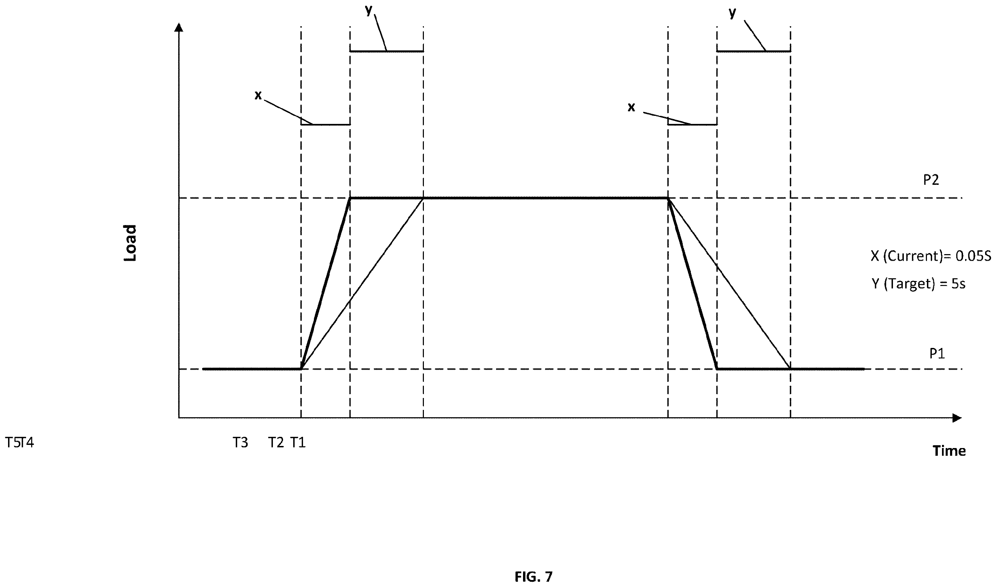

FIG. 7 provides a graph representing rates of power demand ramp-up and ramp-down when the supercapacitor control system is used. The supercapacitor control system may be configured to adjust the rate of power demand ramp-up and ramp-down during the start and stop of training the ML models. When the training of the ML models begins, the power demand begins to increase at T1 and reaches the peak at T2 when the supercapacitor control system is not used. In some examples, the supercapacitor control system may be configured to initiate the discharging of the supercapacitors at T1 such that the power demand reaches its peak at T3 instead of T2, thereby mitigating the abrupt increase of the power demand. Delaying the time required to increase the power demand may help maintain the stability of the power supply. When the training of the ML models begins to complete at T4, the power demand abruptly drops and reaches its initial level at T5 when the supercapacitor control system is not used. In some examples, the supercapacitor control system may be configured to initiate charging the supercapacitors such that the power demand decreases at a slower rate and reaches its initial level at T6 instead of T5. The power charged during the period between T5 and T6 may be discharged when the training of the ML models starts again.

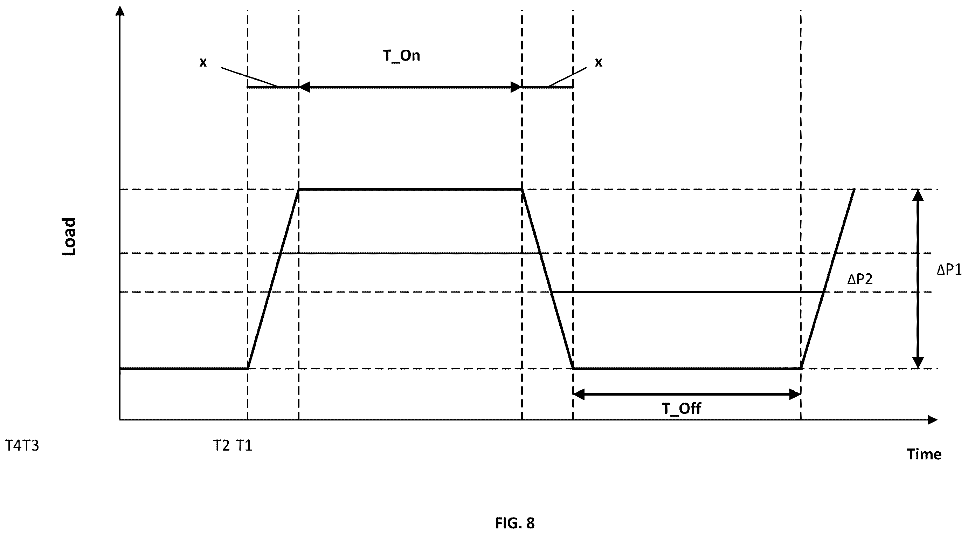

FIG. 8 provides a graph representing peak reduction during power fluctuations when the supercapacitor control system is used. For the purpose of the present disclosure, it shall be understood that the values shown in FIG.8 are for illustration purposes only and such values may vary in other examples. The supercapacitor control system may be configured to reduce or substantially mitigate high-frequency peak-to-peak power fluctuations during the execution of training the ML models. The supercapacitor control system may be configured to discharge the supercapacitors during the peak power demands and charge the supercapacitors during the workload idle period. For example, the training of the ML models may begin at T1, and the power demand may reach its peak at T2. According to some examples, the supercapacitor control system may be configured to discharge the power stored in the supercapacitors at T1 such that the power demand reaches a peak lower than the original peak at the time between T1 and T2. The power demand may start to decrease at T3, but the supercapacitor control system may be configured to charge the supercapacitors such that the power demand does not drop to the point where it was before T1. The reduced peak-to-peak power demand may help maintain the stability of the power utility.

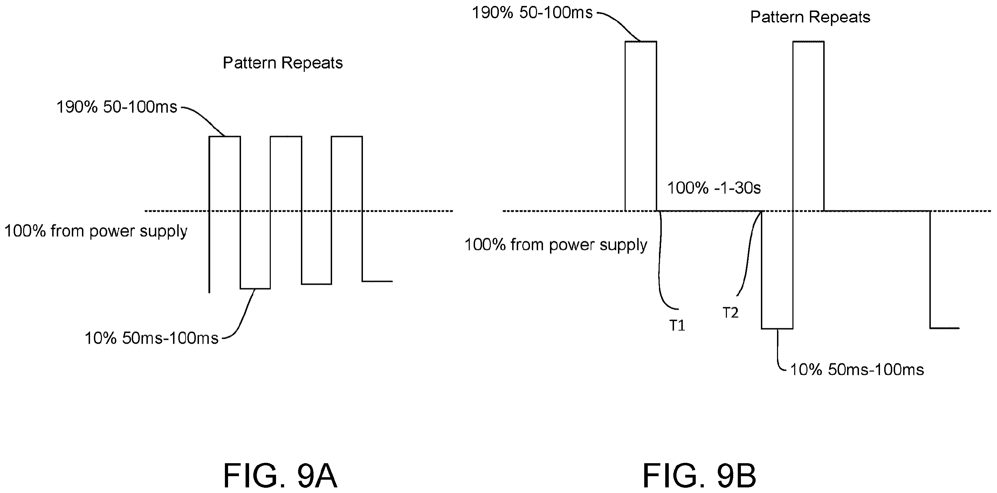

FIGS. 9A-B provide graphs representing peak load support for high frequency and repetitive power fluctuations when the supercapacitor control system is used. For the purpose of the present disclosure, it shall be understood that the values shown in FIGS. 9A-B are for illustration purposes only and such values may vary in other examples. FIG. 9A shows a graph of power demand fluctuations when the supercapacitor control system is not used. The graph shows a repeated pattern of power demand ramp-ups and ramp-downs. FIG. 9B shows a graph of power demand fluctuations when the supercapacitor control system discharges the power stored in the supercapacitors such that the power demand ramps down relatively slowly. The period between T1 and T2 represents the delayed time before the power demand fully ramps down.

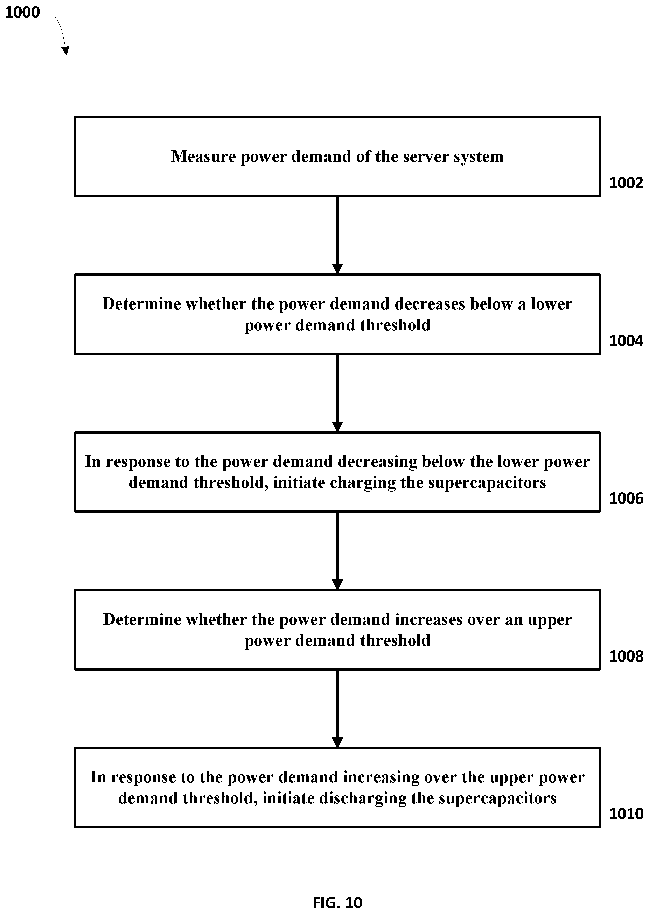

FIG. 10 illustrates an example flow diagram of the supercapacitor control system. According to block 1002, the system may be configured to measure the power demand of the data center. The power demand may change when the workloads of the server racks increase or decrease. When the workload decreases, such as in the active idle state or deep idle state, the power demand decreases.

According to block 1004, the system may be configured to determine whether the power demand decreases below a lower power demand threshold. According to some examples, if the power demand decreases below the lower power demand threshold, the power supply may reduce the amount of power transmitted to each server rack.

According to block 1006, the system may be configured to, in response to the power demand decreasing below the lower power demand threshold, initiate charging the supercapacitors. The supercapacitors may be configured to start to charge, and the power supply does not need to reduce the amount of power transmitted to each server rack. The system may maintain the steady amount of power supplied from the power supply by charging the supercapacitors with unused power during the idle state. The system may continue to charge the supercapacitors until the supercapacitors reach a certain threshold of state of charge (SOC).

According to block 1008, the system may be configured to determine whether the power demand increases over an upper power demand threshold. In some examples, if the power demand increases over the upper power demand threshold, the power supply may increase the amount of power supply.

According to block 1010, in response to the power demand increase over the upper power demand threshold, the system may be configured to discharge the power stored in the supercapacitors. In such an example, the power discharged from the supercapacitors can be used by the server racks such that the power supply does not need to abruptly increase the amount of power.

Generally disclosed herein is a mechanism to mitigate power fluctuations of a data center by dynamically charging and discharging a capacitor-based energy storage device. According to some examples, a supercapacitor control system can be configured to monitor power demand fluctuations and initiate charging of the supercapacitor during a workload ramp-up period for training machine learning (ML) models with massive training data. As the system starts discharging the supercapacitors during the ramp-up period, the system is capable of reducing the rate of the power demand increase. Similarly, during a ramp-down period, the system is configured to charge the supercapacitor as the training of the ML model is being finished and the power demand decreases. The power stored in the supercapacitors may be used to reduce the rate of the power demand decrease when the training of the ML model is being completed, thereby maintaining the stability of the power utility. The supercapacitor control system described herein is beneficial at least in that it provides for efficiently charging and discharging the power in the supercapacitors when a certain amount of power is no longer needed due to the sudden decrease in workloads and power demand. The stored power can be discharged to alleviate the burden of the power supply for supplying a significantly increased amount of power in a short period when the workloads and power demand drastically increase within a short period. Thus, the supercapacitor control system can promote the stability of the amount of the power supply and avoid hardware degradations of the power supply device.

In this specification, the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the spirit and scope of the present technology as defined by the appended claims.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for mitigating power fluctuations of a data center, the system comprising:
one or more supercapacitors; and
one or more processors in communication with the one or more supercapacitors, the one or more processors configured to:
measure power demand of the data center;
determine whether the power demand decreases below a lower power demand threshold;
in response to the power demand decreasing below the lower power demand threshold, initiate charging the one or more supercapacitors;
determine whether the power demand increases over an upper power demand threshold; and
in response to the power demand increasing over the upper power demand threshold, initiate discharging the one or more supercapacitors.

2. The system of claim 1, wherein the one or more processors are configured to disengage charging of each supercapacitor of the one or more supercapacitors when a state of charge, SOC, of each supercapacitor reaches a SOC threshold.

3. The system of claim 1 or claim 2, wherein the one or more supercapacitors are configured to be discharged during a period of power demand ramp-up to reduce a rate of a power demand increase.

4. The system of any one of claims 1 to 3, wherein the one or more supercapacitors are configured to be charged during a period of power demand ramp-down to reduce a rate of power demand decrease.

5. The system of any one of claims 1 to 4, wherein the discharging of the one or more supercapacitors is initiated when one or more SOCs of the one or more supercapacitors are more than a SOC threshold.

6. The system of any one of claims 1 to 5, wherein the one or more supercapacitors are located within server racks or a dedicated power rack included in the data center.

7. The system of any one of claims 1 to 6, wherein the charging of the one or more supercapacitors is initiated during at least one of a deep idle period or an active idle period, and wherein the one or more supercapacitors are configured to continually charge during both the deep idle period and active idle period; and
wherein optionally the deep idle period and the active idle period are due to transient workload fluctuations.

8. A method for mitigating power fluctuations of a data center, the method comprising:
measuring power demand of the data center;
determining whether the power demand decreases below a lower power demand threshold;
in response to the power demand decreasing below the lower power demand threshold, initiating charging one or more supercapacitors;
determining whether the power demand increases over an upper power demand threshold; and
in response to the power demand increasing over the upper power demand threshold, initiating discharging the one or more supercapacitors.

9. The method of claim 8, further comprising:
disengaging charging of each supercapacitor of the one or more supercapacitors when a state of charge, SOC, of each supercapacitor reaches a SOC threshold.

10. The method of claim 8 or claim 9, wherein the one or more supercapacitors are discharged during a period of power demand ramp-up to reduce a rate of a power demand increase.

11. The method of any one of claims 8 to 10, wherein the one or more supercapacitors are charged during a period of power demand ramp-down to reduce a rate of power demand decrease.

12. The method of any one of claims 8 to 11, wherein the discharging of the one or more supercapacitors is initiated when one or more SOCs of the one or more supercapacitors are more than a SOC threshold; and/or
wherein the one or more supercapacitors are located within server racks or a dedicated power rack included in the data center.

13. The method of any one of claims 8 to 12, wherein the charging of the one or more supercapacitors is initiated during at least one of a deep idle period or an active idle period, and wherein the one or more supercapacitors are configured to continually charge during both the deep idle period and active idle period; and
wherein optionally the deep idle period and the active idle period are due to transient workload fluctuations.

14. A non-transitory machine-readable medium comprising machine-readable instructions encoded thereon for performing the method according to any one of claims 8 to 13.

15. A computer program comprising instructions that when performed by one or more processors, causes the one or more processors to perform the method according to any one of claims 8 to 13.
